# DEMANDE DE BREVET EUROPEEN

(11) **EP 1 176 673 A1**
(43) Date de publication de la demande: **30.01.2002**
(21) Numéro de dépôt: 01401996.2
(22) Date de dépôt: 25.07.2001
(51) Int. Cl.: H01R 13/514, H01R 13/518, H04Q 1/14

(54) **Réglette de raccordement haute densité**

(30) Priorité: 27.07.2000 FR 0009833
(71) Demandeur: Nexans, 75008 Paris (FR)
(72) Inventeur: Miquet, Pascal, 08090 Tournes (FR)
(74) Mandataire: Lenne, Laurence

(57) **Abrégé**

La réglette est constituée de modules plats superposés comportant des couples de premiers et deuxièmes contacts pour le raccordement de paires d'un câble à des jarretières.

Elle est caractérisée en ce que chacun desdits modules consiste en un coffret (1) contenant un connecteur arrière (3) précâblé aux paires et des connecteurs avant (5) munis chacun d'un poussoir (9) de raccordement de l'une des jarretières et enfichables dans le connecteur arrière.

## Description

La présente invention se rapporte aux réglettes de raccordement destinées à réaliser la connexion des paires d'un câble multipaires à des jarretières et permettre leur déconnexion.

De manière connue, une réglette de raccordement consiste en un empilement de galettes ou modules plats similaires, habituellement de 16 modules, et est affectée à un câble de 128 paires.

Le document EP-A-0489642 divulgue une telle réglette dont les modules sont en deux parties assemblables l'une à l'autre et séparables l'une de l'autre. L'une des parties dite partie arrière comporte un corps isolant muni de premiers contacts auxquels sont raccordées des paires d'un câble, en général 8 paires. L'autre partie dite avant comporte également un corps isolant muni de deuxièmes contacts auxquels sont raccordées des jarretières. Ces premiers et deuxièmes contacts sont agencés de manière correspondante dans les parties avant et arrière respectives pour être reliés les uns aux autres et connecter les paires aux jarretières, quand les deux parties sont assemblées l'une à l'autre. Ces contacts ont à cet effet une queue de liaison élastique.

Cette réglette permet la connexion / déconnexion d'un ensemble de paires, en l'occurrence 8 paires, à un même ensemble de jarretières, avec l'assemblage / séparation des deux parties de l'un des modules. Il est par contre souvent préféré de pouvoir connecter / déconnecter individuellement chacune des jarretières et non pas l'ensemble de jarretières, ce que ne permet pas cette réglette.

Le document EP-A-0609135 divulgue un autre type de réglette, également pour un câble 128 paires. Cette réglette est constituée dans un corps isolant compartimenté selon l'une de ses dimensions, à savoir selon sa hauteur ou sa largeur. Elle comporte des connecteurs arrière de paires du câble, précâblés chacun sur 8 paires et ainsi montés chacun dans la partie arrière de l'un des différents compartiments, et des connecteurs avant de jarretière, précâblés chacun sur une jarretière en intégrant des composants de protection et reçus dans les parties avant des compartiments. Plusieurs connecteurs avant peuvent ainsi s'enficher dans l'un des connecteurs arrière ou dans des circuits de protection de lignes intercalés dans le corps isolant entre chacun des connecteurs arrière et les connecteurs avant de jarretière et les interconnectant. Une telle réglette de structure globale unitaire et à protections intégrées des lignes est de coût élevé et de dimensions importantes et ne permet pas une augmentation de capacité sans augmentation de ses dimensions.

La conception de connecteurs précâblés de haute densité est par ailleurs en tant que telle connue. Ces connecteurs sont notamment ceux du type HE-12 utilisés dans des autocommutateurs et équipés de contacts autodénudants de faible encombrement, auxquels des paires sont raccordées aux contacts en usine sur machine automatique ou semi-automatique. L'utilisation de tels connecteurs précâblés haute densité dans une réglette de raccordement permettrait d'augmenter la capacité de la réglette sans augmenter les dimensions de celle-ci. Cependant, les dimensions des connecteurs individuels de jarretière n'ont pas permis jusqu'à présent d'augmenter la capacité des réglettes de raccordement.

La présente invention répond à ce but. Elle permet avantageusement de réaliser des réglettes modulaires, de capacité pouvant être double de celle des réglettes connues et de mêmes dimensions que celles-ci.

Elle a pour objet une réglette de raccordement haute densité, constituée de compartiments adjacents qui comportent chacun un ensemble de couples de premiers contacts raccordés à des paires d'un câble multipaires et des couples de deuxièmes contacts de connexion de jarretières aux couples de premiers contacts, chacun desdits compartiments ayant une face avant étroite et allongée ouverte et au moins une ouverture arrière et un connecteur arrière précâblé étant équipé desdits couples de premiers contacts définissant deux rangées de points de connexion et enfichage au droit de ladite face avant ouverte dudit compartiment, et chaque compartiment contenant des connecteurs plats avant de jarretière, équipés chacun de l'un des couples de deuxièmes contacts et d'un poussoir de raccordement de l'une des jarretières à ceux-ci, montés mobiles chacun transversalement à la face avant ouverte dudit compartiment et enfichables chacun dans deux points de connexion et enfichage dudit connecteur arrière, caractérisée en ce que chaque compartiment est un module plat consistant en un coffret isolant contenant ledit connecteur arrière précâblé haute densité et en ce que les modules sont superposés.

Dans un mode avantageux de réalisation, chacun desdits connecteurs avant de jarretière comporte un corps isolant de base présentant une face échancrée, l'un des couples de deuxièmes contacts retenus côte à côte dans ladite face échancrée, et le poussoir de raccordement monté et retenu sur ladite face échancrée, entre une position non totalement enfoncée sur le corps de base et une position totalement enfoncée sur celui-ci.

De préférence en outre, chacun desdits deuxièmes contacts comporte une base plate et allongée, au moins une fourche autodénudante transversale à la base et définie entre des bords pliés et découpés prévus sur ladite base, et une broche terminale transversale à ladite base et saillante à l'une des extrémités de celle-ci.

Les caractéristiques et avantages de la présente invention ressortiront de la description d'un mode de réalisation donné à titre d'exemple dans les dessins ci-annexés. Dans ces dessins :
- la figure 1 est une vue en perspective de deux galettes ou modules de raccordement, partiellement équipés, d'une réglette selon l'invention ;
- la figure 2 est une vue en perspective de l'un des modules partiellement équipé et ouvert ;
- la figure 3 est une vue en perspective éclatée d'un connecteur de jarretière, reçu dans l'un des modules ;
- les figures 4 et 5 sont deux vues en perspective du connecteur de jarretière, pour deux positions d'un poussoir sur celui-ci ;
- la figure 6 est une vue en perspective du poussoir, séparé du connecteur de jarretière et retourné sur lui-même.

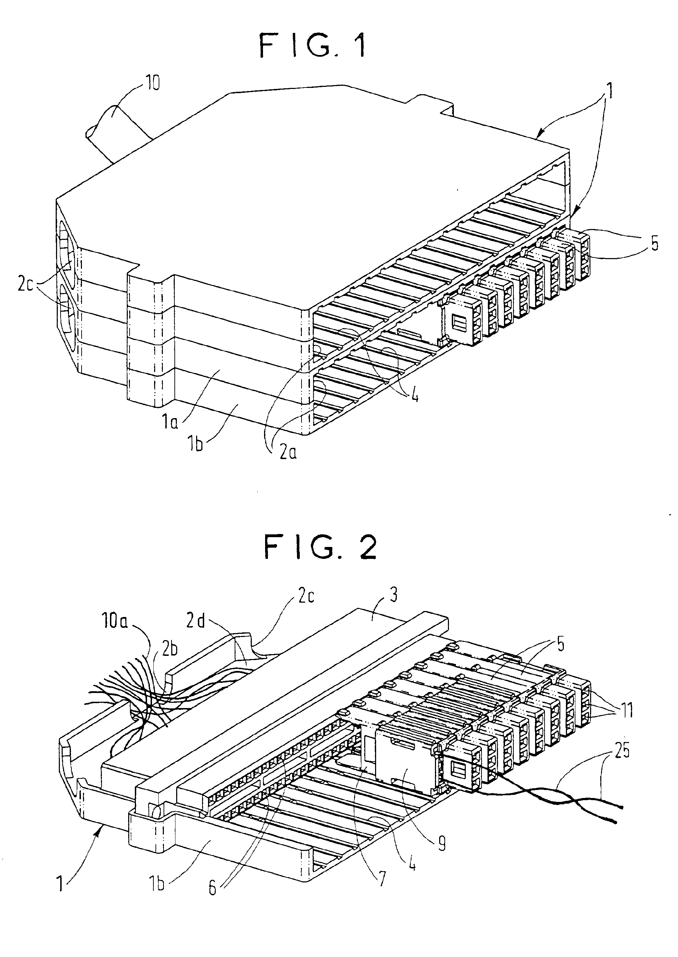

La figure 1 montre deux des modules de raccordement 1, plats et superposés, qui composent la réglette selon l'invention. Chacun de ces modules est affecté au raccordement de 16 paires d'un câble multipaires 10 à 16 jarretières (non représentées). La réglette comporte 16 modules similaires superposés et est ainsi affectée au câble 10 de 256 paires, tout en présentant les mêmes dimensions que les réglettes connues 128 paires.

Chaque module 1 consiste en un coffret désigné par cette référence 1, qui est formé par une partie supérieure 1a et une partie inférieure 1b, sensiblement analogues et assemblées l'une à l'autre, et qui est équipé intérieurement comme décrit ci-après. Ce coffret est en matériau plastique isolant. Il a une face avant 2a étroite et totalement ouverte et des ouvertures arrière 2b, 2c, sur ses faces arrière et latérales.

En se référant à la figure 2, il apparaît que chaque module 1 est équipé intérieurement d'un connecteur arrière précâblé 3, qui est monté fixe sensiblement dans une moitié arrière en ménageant un espace arrière libre 2d pour les paires 10a précâblées sur ce connecteur et reçues à travers l'une des ouvertures arrière 2b ou 2c. Il est pourvu de guides 4, en vis-à-vis sur les parois supérieure et inférieure de sa moitié avant et est équipé de connecteurs avant 5 de jarretière montés sur ces guides. Ces connecteurs individuels avant sont mobiles entre une position enfichée dans le connecteur arrière et une position non enfichée.

Le connecteur arrière 3 précâblé aux paires 10a est un connecteur haute densité de type connu, tel que de type HE-12. Il est muni de deux rangées de contacts autodénudants de faible encombrement, définissant deux rangées de points de connexion et enfichage avant 6, au droit de la face avant ouverte du module 1.

Ce connecteur haute densité 3, précâblé aux paires et utilisé dans chacun des modules de la réglette, rend les modules et la réglette résultante de haute densité ou capacité, sans augmentation de dimensions. Les connecteurs avant 5 de jarretière sont adaptés à connecteurs 3 et munis de contacts intérieurs de faible encombrement, qui sont globalement semblables à ceux du connecteur 3 et sont décrits ci-après.

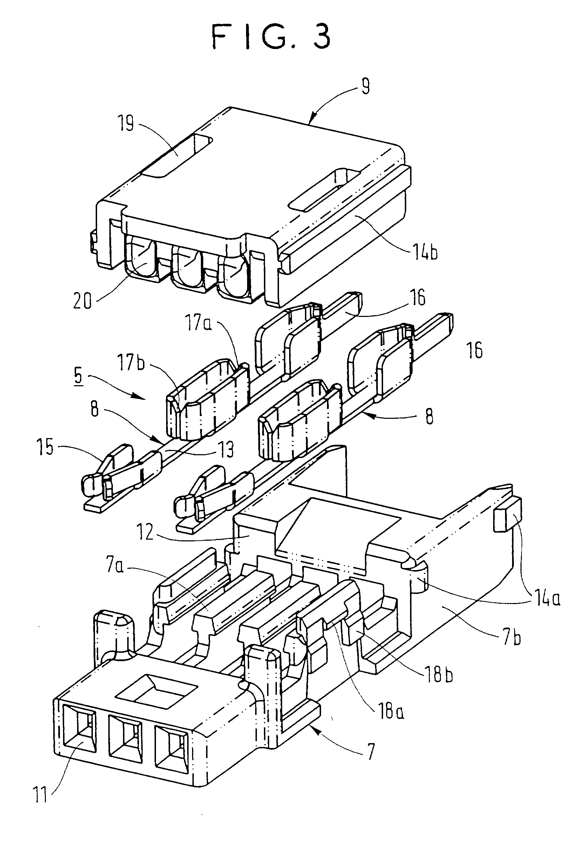

L'un quelconque des connecteurs individuels 5 de jarretière est décrit en se référant à la figure 2 et plus particulièrement la figure 3. Il comporte un corps isolant de base 7 présentant une face échancrée, deux contacts identiques 8 et un possible troisième contact analogue retenus côte à côte dans la face échancrée du support de base, et un poussoir 9 rapporté et retenu sur une portion médiane de la face échancrée du support de base.

Le connecteur 5 ainsi réalisé est plat. Il est monté par ses tranches de faible épaisseur entre les guides 4 de la partie avant de l'un des modules 1. Il s'ensuit que le poussoir du connecteur en place dans le module ou coffret 1 est parallèle aux petites faces latérales du coffret et est dit latéral sur ce connecteur en place dans le coffret.

Les contacts 8 et le possible autre contact sont logés entre des nervures 7a sur la face échancrée et sont retenus dans des canaux débouchants avant tels que 11 et arrière tel que 12 du corps de base. Ces canaux avant 11 sont utilisés pour des tests, les canaux arrière permettent le passage des contacts pour l'enfichache des deux contacts 8 dans deux points de connexion superposés 6 du connecteur arrière 3. Deux branches arrière 7b prévues sur le corps de base protègent les parties des contacts au-delà des canaux arrière. Elles sont reçues élastiquement sur le connecteur arrière, quand le connecteur 5 est enfiché dans celui-ci.

Des guides 14a sur les tranches du corps de base et 14b sur le poussoir 9 sont complémentaires des guides 4 dans la partie avant du module 1, pour le guidage du connecteur 5.

Chacun des contacts 8 est réalisé pour découpe et pliage d'une bande métallique initialement plate. Il présente ainsi essentiellement une base plate longitudinale 13, une fiche avant 15 du type pince sur la partie terminale avant de la base, une broche arrière 16 plate, transversale à la base et saillante sur l'extrémité arrière de celle-ci, et deux fourches autodénudantes médianes 17a, 17b transversales à la base 13 et obtenues par pliage des deux bords de la bande initiale. Ces deux fourches autodénudantes permettent le raccordement en deux points de l'un des deux fils d'une jarretière au contact 8.

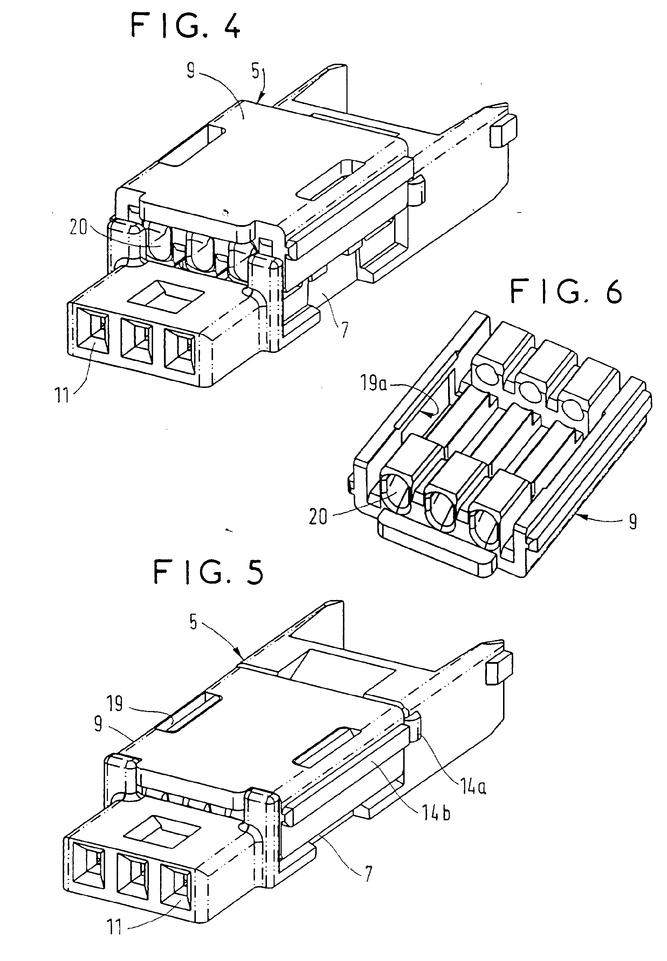

Le poussoir 9 monté sur le corps de base s'étend en regard des deux fourches autodénudantes des contacts 8 logés dans celui-ci. Il présente deux positions de maintien sur le corps de base, à savoir une position non totalement enfoncée et une position totalement enfoncée. Ces positions sont définies par deux jeux étagés d'ergots 18a et 18b sur les tranches du corps de base et par un bord d'accrochage 19a d'une fenêtre intérieure 19 sur chacune des parties latérales du poussoir. Ces deux positions sont illustrées dans les figures 4 et 5, les dispositions précitées prévues à cet effet étant quant à elles visibles plus précisément dans les figures 3 et 6.

Ce poussoir 9 a trois canaux avant 20 d'entrée de deux fils de jarretière dans le poussoir et d'un possible fil de terre alors raccordé à un troisième contact central analogue aux deux contacts 8 du connecteur 5.

L'introduction des fils dans le poussoir 9 se fait alors que celui-ci est en position non totalement enfoncée sur le corps de base 7, illustrée dans la figure 4. Ces fils sont raccordés dans les fourches autodénudantes des contacts, avec la mise du poussoir en position totalement enfoncée sur le corps de base, illustrée dans la figure 5 et réalisée à l'aide d'un outil de type pince.

Deux fils 25 de jarretière, sans fil de terre, sont montrés raccordés à l'un des connecteurs 5 de jarretière dans la figure 2. Leur raccordement au connecteur 5 est effectué alors que le connecteur est monté dans le module mais est en position non enfichée dans le connecteur 3 de paires. Il pourrait bien entendu être effectué alors que le connecteur est extrait hors du module 1.

Ces connecteurs individuels 5 de jarretière, équipés de contacts 8 de faible encombrement et de leur poussoir s'encliquetant à fond sur le corps de base 7, sont rendus très plats. Ils permettent un pas de montage très faible dans le module 1, qui correspond au pas de montage des contacts du connecteur 3 de type HE-12, pour rendre le module 1 de haute densité ou capacité. Ils permettent en outre des tests possibles, par les canaux avant 11 dans le corps de base donnant accès aux fiches avant des contacts du connecteur de jarretière. Son utilisation est aisée grâce aux canaux avant prévus dans le poussoir pour l'introduction des fils de la jarretière dans celui-ci, et l'escamotage latéral du poussoir sur le corps de base lors du raccordement de la jarretière au connecteur avant.

## Revendications

1. Réglette de raccordement haute densité, constituée de compartiments adjacents qui comportent chacun un ensemble de couples de premiers contacts raccordés à des paires d'un câble multipaires et des couples de deuxièmes contacts de connexion de jarretières aux couples de premiers contacts, chacun desdits compartiments ayant une face avant (2a) étroite et allongée ouverte et au moins une ouverture arrière (2b, 2c) et un connecteur arrière précâblé (3) étant équipé desdits couples de premiers contacts définissant deux rangées de points de connexion et enfichage (6) au droit de ladite face avant ouverte dudit compartiment, et chaque compartiment contenant des connecteurs plats avant (5) de jarretière (25), équipés chacun de l'un des couples de deuxièmes contacts (8) et d'un poussoir (9) de raccordement de l'une des jarretières à ceux-ci, montés mobiles chacun transversalement à la face avant ouverte dudit compartiment et enfichables chacun dans deux points de connexion et enfichage (6) dudit connecteur arrière (3), **caractérisée en ce que** chaque compartiment est un module plat consistant en un coffret isolant (1) contenant ledit connecteur arrière précâblé haute densité (3) et **en ce que** les modules sont superposés.

2. Réglette selon la revendication 1, **caractérisée en ce que** chacun desdits connecteurs avant (5) de jarretière comporte un corps isolant de base (7) présentant une face échancrée, l'un des couples de deuxièmes contacts (8) retenus côte à côte dans ladite face échancrée, et le poussoir de raccordement (9) monté et retenu sur ladite face échancrée, entre une position non totalement enfoncée sur le corps de base et une position totalement enfoncée sur celui-ci.

3. Réglette selon l'une des revendications 1 et 2, **caractérisée en ce que** chacun desdits deuxièmes contacts (8) comporte une base plate et allongée (13), au moins une fourche autodénudante (17a, 17b) transversale à la base et définie entre des bords pliés et découpés prévus sur ladite base, et une broche terminale (16) transversale à ladite base et saillante à l'une des extrémités de celle-ci.

4. Réglette selon la revendication 3, **caractérisée en ce que** chacun desdits deuxièmes contacts comporte en outre une fiche terminale (15) opposée à ladite broche.

5. Réglette selon l'une des revendications 3 et 4, **caractérisée en ce que** chacun desdits connecteurs avant (5) comporte un troisième contact, identique à chacun desdits deuxièmes contacts (8) et monté entre les deux deuxièmes contacts du connecteur avant.

6. Réglette selon l'une des revendications 3 et 5, **caractérisée en ce que** le corps de base (7) de chacun desdits connecteurs avant (5) comporte des canaux avant débouchants (11) d'accès aux contacts intérieurs, et le poussoir (9) du connecteur avant d'autres canaux avant (20) d'entrée de fils de l'une des jarretières et d'un possible fil de terre.

7. Réglette selon l'une des revendications 2 à 6, **caractérisée en ce que** chacun desdits connecteurs avant (5) et le coffret (1) sont munis de guides complémentaires (14a, 14b, 4).

8. Réglette selon la revendication 7, **caractérisée en ce que** les guides (14a, 14b) sur ledit connecteur avant s'entendent sur le corps de base et sur le poussoir de celui-ci.

9. Réglette selon l'une des revendications 2 à 6, **caractérisée en ce que** chaque connecteur avant (5) comporte deux jeux étagés d'ergots (18a, 18b) et des bords d'accrochage (19a) de ceux-ci, prévus pour les uns sur ledit corps de base (7) et pour les autres dans ledit poussoir (9) pour l'obtention desdites positions non totalement enfoncée et totalement enfoncée dudit poussoir sur ledit corps de base.

10. Réglette selon l'une des revendications 2 à 9, **caractérisée en ce que** le poussoir (9) de chaque connecteur avant (5) est latéral sur ce connecteur avant en place dans ledit coffret (1).

11. Réglette selon l'une des revendications 2 à 10, **caractérisée en ce qu'**un espace arrière (2d) est prévu entre le connecteur arrière (3) dans le coffret (1) et une paroi arrière dudit coffret, pour les paires (10a) précâblées audit connecteur arrière et reçues dans ledit coffret.

12. Réglette selon l'une des revendications 2 à 11, **caractérisée en ce que** le connecteur arrière (3) de chacun desdits modules (1) est un connecteur 16 paires.
